# EUROPÄISCHE PATENTSCHRIFT

(11) **EP 2 433 742 B1**
(45) Veröffentlichungstag und Bekanntmachung des Hinweises auf die Patenterteilung: **19.11.2014**
(21) Anmeldenummer: 11182319.1
(22) Anmeldetag: 22.09.2011
(51) Int. Cl.: B23Q 1/38, B23Q 1/76

(54) **Lünette zur hydrostatischen Abstützung eines Werkstücks einer Werkzeugmaschine**
Rest for hydrostatically supporting a workpiece of a machine tool
Lunette destinée au soutien hydrostatique d'une pièce d'une machine-outil

(30) Priorität: 22.09.2010 AT 15792010
(43) Veröffentlichungstag der Anmeldung: 28.03.2012
(73) Patentinhaber: WFL Millturn Technologies GmbH & Co. KG, 4030 Linz (AT)
(72) Erfinder: Wimmer, Karl, 4048 Puchenau (AT); Dr. Pernkopf, Friedrich, 4040 Linz (AT)
(74) Vertreter: Jell, Friedrich

(56) Entgegenhaltungen:
- EP-A1- 2 145 726
- DE-A1- 3 909 411
- GB-A- 1 296 084
- SU-A1- 666 034
- SU-A1- 755 493

## Beschreibung

Die Erfindung betrifft eine Lünette zur Lagerung eines Werkstücks einer Werkzeugmaschine mit einem Träger zur vorzugsweisen Montage am Maschinenbett der Werkzeugmaschine, mit mindestens einer Schale, die wenigstens eine hydrostatische Lagerstelle für das Werkstück aufweist, und mit einer zwischen dem Träger und der Schale vorgesehenen Positioniereinrichtung, die mindestens eine Verstellachse zum Anstellen der Schale an das Werkstück aufweist.

Zur Verminderung des Durchhangs von eingespannten Werkstücken ist es aus dem Stand der Technik bekannt (DE3909411A1), eine Lünette mit mehreren zueinander versetzen hydrostatischen Schalen zu verwenden, um das Werkstück an verschiedenen Positionen abstützen zu können. Nachteilig ist, dass einerseits durch die erhebliche Anzahl der Schalen ein vergleichsweise hoher konstruktiver Aufwand besteht, andererseits auch eine genaue Übereinstimmung der Lagerachsen der Schalen einen erheblichen Fertigungsaufwand bedarf. Letzteres birgt insbesondere die Gefahr einer unzureichend genauen Abstützung des Werkstücks, was nachteilig zu diesem Werkstück hohe Bearbeitungsgenauigkeit unterbindet. Bekannte hydrostatische Lünetten sind daher bei geforderten engen Fertigungstoleranzen meist nicht verwendbar.

Außerdem ist für Drehmaschinen eine Lünette bekannt (EP2145726A1), die auf einem Träger eine Schale mit mehreren hydrostatischen Lagerstellen aufweist. Die Schale ist über den Träger mit dem Maschinengestell verstellfest verbunden.

Ein Stand der Technik gemäß Oberbegriff ist aus der SU755493A1 und SU666034A1 bekannt.

Die Erfindung hat sich daher die Aufgabe gestellt, eine Lünette der eingangs geschilderten Art derart zu verbessern, dass auf konstruktiv einfache Weise eine exakte und positionsgenaue Abstützung eines Werkstücks einer Werkzeugmaschine gewährleistet werden kann. Außerdem soll die Lünette bedienungsfreundlich und standfest sein.

Die Erfindung löst die gestellte Aufgabe durch die Lünette nach Anspruch 1.

Weist einerseits die Schale wenigstens zwei voneinander beabstandete hydrostatische Lagerstellen auf, so kann auf einfache Weise eine gemeinsame Lagerachse für eine hydrostatische Lagerung sichergestellt werden, ohne dass ein aufwendiges Abgleichen von zusammenwirkenden Schalen, wie aus dem Stand der Technik bekannt, notwendig wird. Weist weiters die Positioniereinrichtung zwei zueinander geneigt verlaufende Verstellachsen auf, wobei die Positioniereinrichtung die Schale an das Werkstück zur Ausbildung einer radialen Werkstückabstützung mithilfe der hydrostatischen Lagerstellen anstellbar ist, dann kann die besonders genaue Abstützung auf Grundlage der gemeinsamen Lagerachse genützt werden, für eine robuste und einfach handhabbare Lünette zu sorgen. Über diese beiden Verstellachsen können nämlich die hydrostatischen Lagerstellen an das Werkstück derart genau angestellt werden, dass sich eine stabile und robuste radiale Abstützung des Werkstücks ergeben kann, auch wenn im Gegensatz zum Stand der Technik lediglich eine Schale verwendet wird. Hinzu kommt, dass mit der mehrachsigen Verstellung der Schalenposition eventuelle Schalenungenauigkeiten an der gekrümmten Lagerfläche ausgleichbar sind, sodass nicht nur eine kostengünstige sondern auch eine einfach handhabbare Lünette geschaffen werden kann. Verschiedenste Aufhängungen für eine mehrachsige Verstellbarkeit der Schale sind vorstellbar, beispielsweise Kombinationen von mehreren Linearlagern oder in Kombination mit einem Schwenklager bzw. zueinander verschiebbaren Keilen. Im Allgemeinen ist jedoch jeder mechanische und/oder elektrische etc. Mechanismus vorstellbar, der mindestens zwei Freiheitsgrade zur Positionierung der Schale ermöglichen kann.

Einfache Konstruktionsverhältnisse können sich ergeben, wenn ausschließlich eine Schale im Wesentlichen die untere Werkstückhälfte des Werkstücks umschließt, weil gegenüber dem Stand der Technik lediglich eine Schale zur radialen Abstützung vorgesehen werden muss. Außerdem kann mit vergleichsweise geringem Aufwand einem Verlust an Lagerflüssigkeit entgegengewirkt werden. So sind lediglich an einer Schale diesbezügliche Maßnahmen zu ergreifen, wodurch eine Kontamination der Lagerflüssigkeit gegenüber Verschmutzungen gering gehalten werden kann. Eine standfeste Lünette ist so konstruktiv einfach schaffbar.

Solche Maßnahmen können auf einfache Weise ergriffen werden, wenn entlang des Rands der Schale eine Dichtung verlaufend vorgesehen ist. Die erfindungsgemäße Schale kann nämlich schon aufgrund der Größe zu einer besonderen Freiheit in der Anordnung der Dichtung führen, wobei vorteilhaft auch durch eine reduzierte Anzahl an Schalen der konstruktive Aufwand deutlich geringer ausfällt. Es kann daher nicht nur auf konstruktiv einfache Weise die Lagerflüssigkeit gegenüber Verschmutzungen geschützt und damit eine besonders standfeste Lünette geschaffen, sondern auch trotz Abdichtung des hydrostatischen Radiallagers eine besonders kostengünstige Lünette ermöglicht werden.

Die Abstützung des Werkstücks kann weiter verbessert werden, wenn die hydrostatischen Lagerstellen der Schale eine zusammenhängende radiale Lagerfläche ausbilden und damit für eine breite Lagerfläche sorgen können. Insbesondere kann sich auch durch diese zusammenhängenden Lagerflächen ein Ausgleich zwischen den hydrostatischen Kenngrößen ergeben, wodurch sich auch eine vergleichsweise hoch dynamische Radiallagerung einstellen kann.

Weist die Schale zwei randseitige Lagerstellen und wenigstens eine dazu mittige hydrostatische Lagerstelle auf, dann kann eine vergleichsweise stabile Lagerung des Werkstücks auf der Lünette sichergestellt werden. Außerdem können sich damit zwischen deren Taschen Freiräume ergeben, die bei veränderten Belastungsanforderungen für nachträglich einzubringende Lagerstellen nutzbar werden können.

Ist die Schale am Träger entsprechend der Werkstückachse teilweise frei kippbar gelagert, dann kann ein biegebedingtes Durchhängen des Werkstücks von der Radiallagerung aufgenommen werden, ohne mit einem reduzierten Lagerspalt rechnen zu müssen. Die Gefahr eines Trockenlaufs kann damit vermindert werden, was neben einer Erhöhung der Standfestigkeit der Lünette auch Beschädigungen am Werkstück ausschließen kann.

Eine vergleichsweise einfache Einstellmöglichkeit kann sich ergeben, wenn die Positioniereinrichtung zwei linear entlang einer Verstellachse verstellbare Stellglieder aufweist, die an unterschiedlichen Schalenpositionen angreifen.

Eine derartige Einstellung kann auch ermöglicht werden, wenn die Positioniereinrichtung ein linear entlang einer Verstellachse verstellbares Stellglied und weiter ein um eine Schwenkachse verschwenkbar gelagertes Stellglied aufweist.

Weist die Werkzeugmaschine einerseits eine Werkstückspannvorrichtung zur Befestigung eines Werkstücks und andererseits die erfindungsgemäße Lünette zur Abstützung des eingespannten Werkstücks auf, dann kann eine besondere Genauigkeit der Werkzeugmaschine ermöglicht werden. Mit dieser Schale kann nämlich im Gegensatz zum Stand der Technik eine radiale Abstützung geschaffen werden, so-dass sich mehrere Schalen mit axialen Abstützungen erübrigen, wie dies im Stand der Technik verwirklicht wird.

In den Figuren ist beispielsweise der Erfindungsgegenstand anhand mehrerer Ausführungsbeispiele dargestellt. Es zeigen
- Fig. 1: eine Seitenansicht auf die Lünette nach einem ersten Ausführungsbeispiel,
- Fig. 2: eine vergrößerte Seitenansicht der Schale der teilweise dargestellten Lünette nach Fig. 1,
- Fig. 3: eine Draufsicht auf die Schale,
- Fig. 4: eine Schnittansicht nach III-III der Fig. 3,
- Fig. 5: eine alternative Ausführungsform der Lünette,

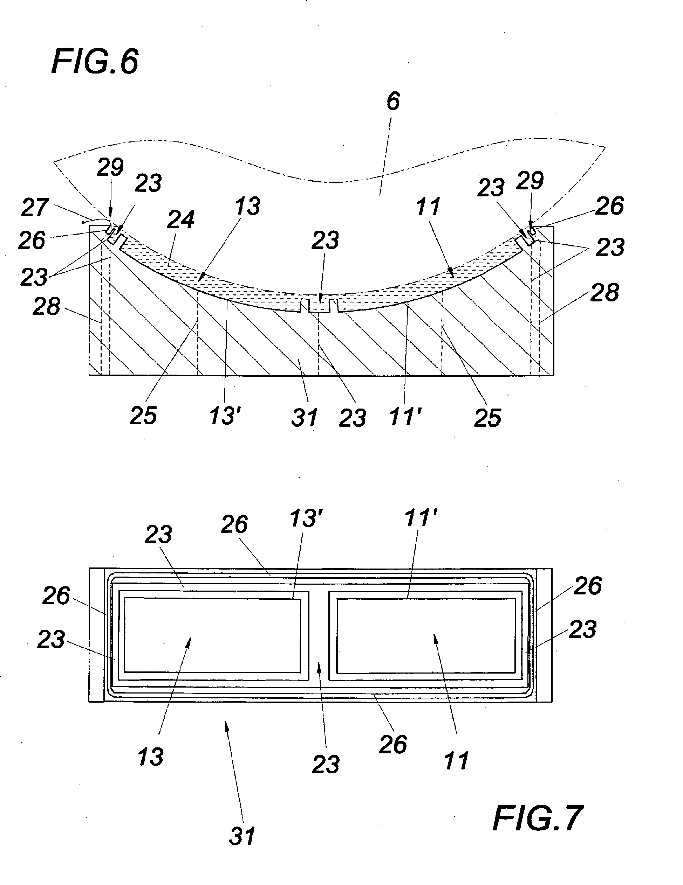

- Fig. 6: eine teilweise aufgerissene Seitenansicht die Schale nach Fig. 5 und
- Fig. 7: eine Draufsicht auf die Schale nach Fig. 6.

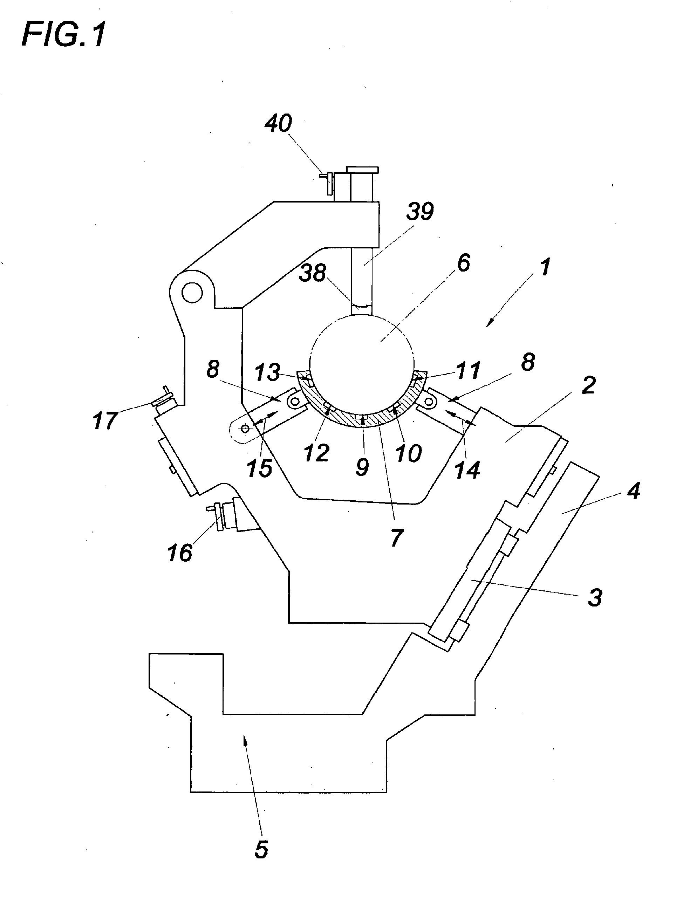

Die beispielsweise nach Fig. 1 dargestellte Lünette 1 als erstes Ausführungsbeispiel weist einen Träger 2 auf, der an einem Schlitten 3 befestigt an einem Maschinenbett 4 einer nicht näher dargestellten Werkzeugmaschine 5 verschiebbar gelagert ist. Die Lünette 1 dient zu Abstützung eines Werkstücks 6, um damit beispielsweise eine Durchbiegung des Werkstücks 6 vermindern zu können, das in eine nicht dargestellte Werkstückspannvorrichtung, beispielsweise ein Futter, eingespannt ist. Zu diesem Zweck weist die Lünette 1 eine Schale 7 auf, die an das Werkstück 6 über eine Positioniereinrichtung 8 angestellt werden kann, und zwar zum Zwecke der Einrichtung der hydrostatischen Lagerstelle 9 gegenüber dem Werkstück 6. Erfindungsgemäß wird nun, um eine besonders vorteilhafte Lagerung des Werkstücks 6 vereint mit einer konstruktiven Einfachheit der Lünette 1 schaffen zu können, die Schale 7 mit mehreren Lagerstellen 9, 10, 11, 12 und 13 versehen. Diese Lagerstellen 9, 10, 11, 12 und 13 sind derart voneinander beabstandet angeordnet, dass die Schale 7 eine radiale Lagerfläche 18 für das Werkstück 6 ausbilden kann, wenn die Schale mithilfe der Positioniereinrichtung 8 an das Werkstück 6 angestellt wird. Zu diesem Zweck weist die Positioniereinrichtung 8 mindestens zwei zueinander geneigt verlaufende Verstellachsen 14 und 15 auf, die jeweils einem linearen Stellglied 14' und 15' zugehören. Über diesbezügliche Kurbelantriebe 16 und 17 können die Stellglieder 14' und 15' betätigt werden, deren Mechanik nicht näher dargestellt worden ist. Die Schale 7 kann daher so als hydrostatisches Radiallager das Werkstück 6 in seiner Lage stabilisieren, sodass aufwendige zusätzliche Nebenschalen - wie im Stand der Technik bekannt - nicht vorgesehen werden müssen.

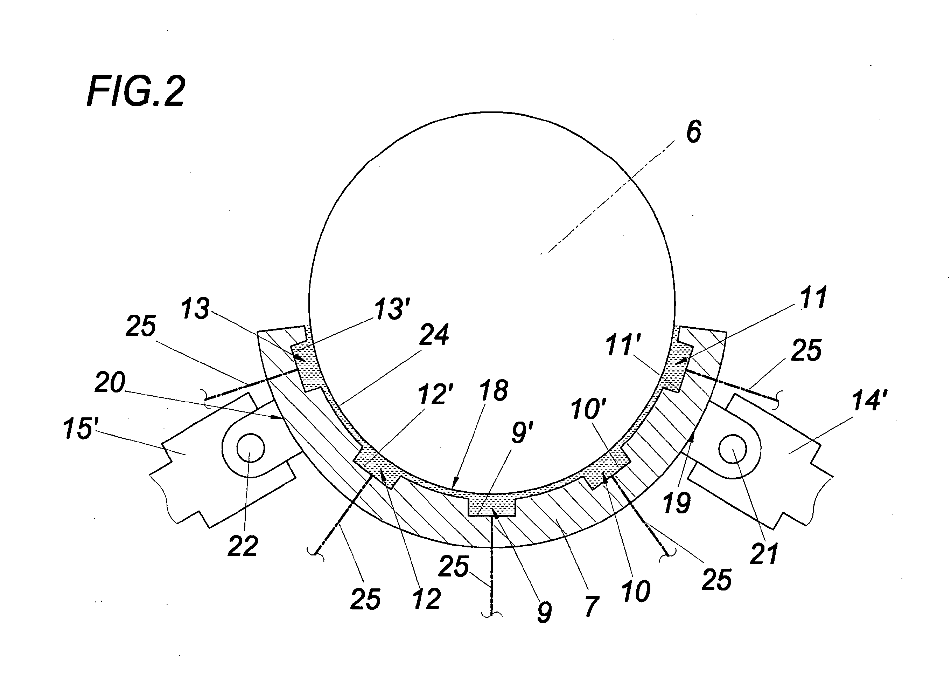

Wie in der Fig. 2 insbesondere zu erkennen, umschließt ausschließlich eine Schale 7 die untere Werkstückhälfte des Werkstücks 6, sodass eine vergleichsweise breite radiale Lagerfläche 18 gebildet werden kann. Die Schale 7 ist zu diesem Zweck nahezu als Halbschale ausgebildet. Im Allgemeinen ist jedoch jede Ausführung denkbar - lediglich die Funktion eines Radiallagers muss die Schale 7 durch seine hydrostatischen Lagerstellen 9, 10, 11, 12 und 13 erfüllen können.

Die Schale 7 weist weiters zwei randseitige hydrostatische Lagerstellen 11 und 13 und mehrere dazwischen angeordnete hydrostatische Lagerstellen 9, 10 und 12 auf, wodurch eine besonders ausgeglichene und standfeste Abstützung gewährleistet werden kann. Außerdem kann mit einer vergleichsweise großen Anzahl an Lagertaschen 9', 10', 11', 12' und 13' auf einfache Weise eine zusammenhängende radiale Lagerfläche 18 sichergestellt werden.

Da die Stellglieder 14' und 15' an den äußeren Schalenpositionen 19 und 20 angreifen, kann eine verbesserte Positionierbarkeit der Schale 7 ermöglicht werden. Zum Ausgleich verschiedenster Winkelpositionen sind die Stellglieder 14' und 15' über Schwenklager 21 und 22 an der Schale 7 befestigt.

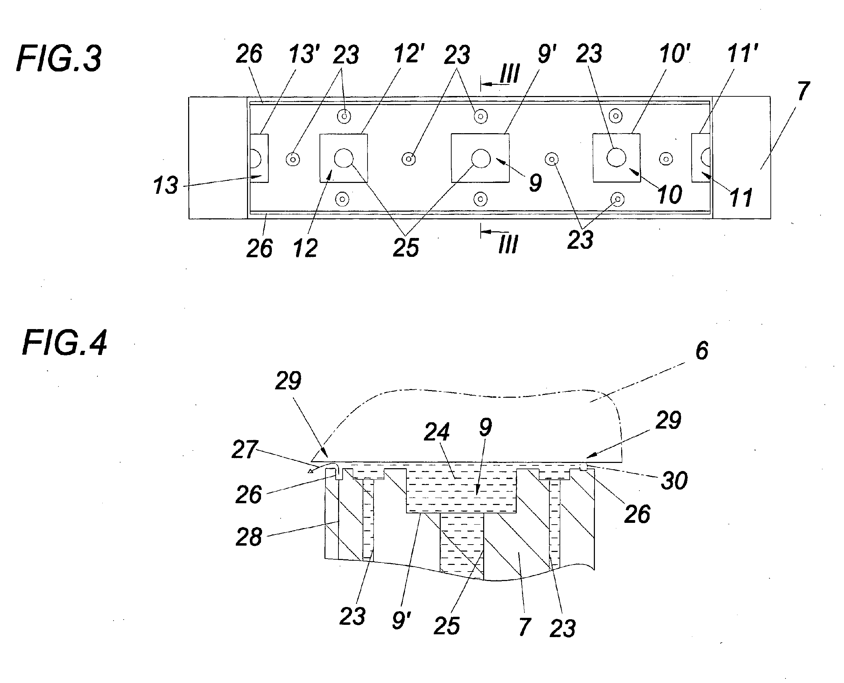

Wie in der Fig. 3 und 4 ersichtlich, weist die Schale 7 auch Rückführkanäle 23 auf, mit denen Lagerflüssigkeit 24 aus dem hydrostatischen Radiallager 18 der Schale 7 abgeführt werden kann. Die Rückführkanäle 23 sind vorzugsweise randseitig angeordnet, um einen Austritt von Lagerflüssigkeit 24 aus dem Radiallager 18 vermindem zu können. Die Lagerflüssigkeit 24 wird über jeweilige Zuführkanäle 25 in die Lagertaschen 9', 10', 11 12' und 13' eingebracht.

Zusätzlich ist zur Reduktion eines Austritts an Lagerflüssigkeit 24 eine randseitige Nut 26 zum Eintreiben von Sperrluft 27 vorgesehen. Die Sperrluft 27 wird durch eine Druckluftleitung 28 der Nut 26 zugeführt. Anhand dieser Sperrluft 27 kann eine randseitige Dichtung 29 geschaffen werden.

Alternativ kann auch eine andere Dichtung 29 vorgesehen werden, wie dies in Fig. 4 auf der gegenüberliegenden Seite der Schale 7 strichpunktiert angedeutet worden ist. Beispielsweise ist vorstellbar, einen O-Ring 30 oder einen nicht dargestellten Filz in die randseitige Nut 26 anstatt der Sperrluft 27 einzubringen.

Derartige Maßnahmen sind an der erfindungsgemäßen Schale 7 vergleichsweise einfach durchzuführen, weil dafür lediglich eine und gegenüber dem Stand der Technik vergleichsweise große Schale 7 zur Verfügung steht. Die Erfindung kann sich daher besonders dadurch auszeichnen, dass die Lünette 1 auch in vergleichsweise stark belasteten Umgebungen, wie diese bei Werkzeugmaschinen 5 bestehen können, für eine standfeste Lagerung sorgen kann. Die Gefahr einer Kontamination der Lagerflüssigkeit 24 kann nämlich durch das besonders einfache Vorsehen einer Dichtung 29 deutlich vermindert werden.

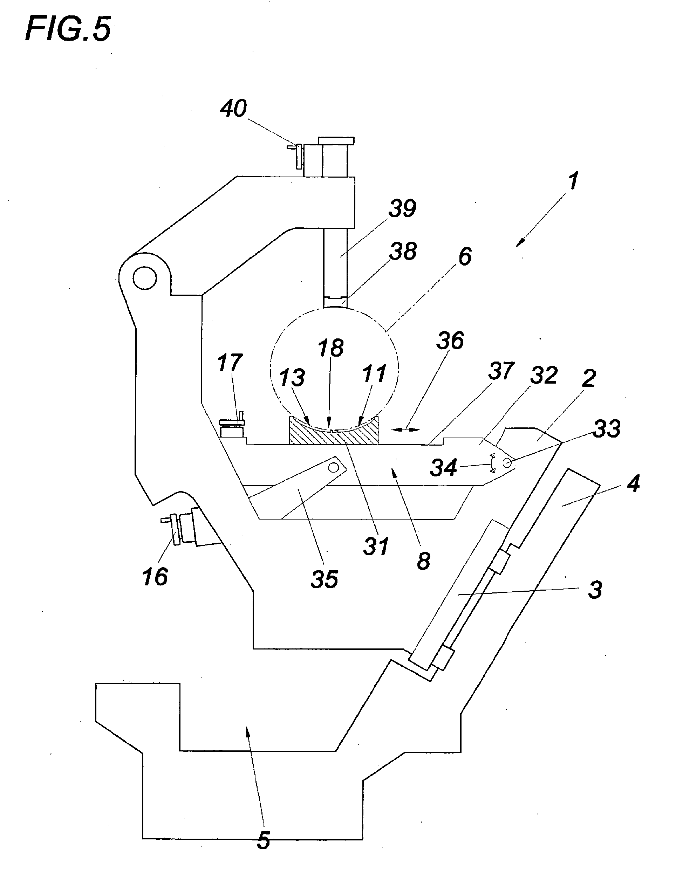

Nach Fig. 5 ist beispielsweise ein weiteres Ausführungsbeispiel dargestellt. Zum Unterschied zu dem nach Fig. 1 dargestellten Ausführungsbeispiel wird hier eine Schale 31 mit einer anderen Positioniereinrichtung 8 gezeigt. Hier ist die Schale 31 auf einem schwenkbar gelagerten Stellglied 32 linear verschiebbar angeordnet. Für diese schwenkbare Lagerung ist zwischen dem Stellglied 32 und dem Träger 2 der Lünette 1 ein Schwenklager 33 vorgesehen, wobei die Schwenklage 34 des Stellglieds 32 über einen Stelltrieb 35, der über den Kurbelantrieb 16 betätigbar ist, verändert werden kann. Die Schale 31 ist weiters über ein entlang einer Verstellachse 36 verstellbares Stellglied 37 linear verstellbar gelagert, um damit die zweite Verstellachse 36 zu schaffen. Das Stellglied 37 ist hier im Stellglied 32 eingebettet vorgesehen, was nicht näher dargestellt worden ist. Beispielsweise kann dies über eine Schnecke ermöglicht werden, die über einen Kurbelantrieb 17 eine lineare Verstellung der Schale 7 gegenüber dem Stellglied 32 schafft. Außerdem wird eine in den Taschen gegenüber der Schale 7 nach Fig. 1 anders aufgeführte Schale 31 dargestellt. So führt die Schale 31 lediglich zwei hydrostatische Lagerstellen 11 und 12. Auch hier sind die hydrostatischen Lagerstellen 11 und 12 an der Schale 31 derart vorgesehen, dass sich damit eine Lagerfläche 18 für das Werkstück 6 ausbildet, um das Werkstück 6 radial abstützen zu können. Die Schale 31 bzw. 7 ist daher an das Werkstück 6 zur Ausbildung einer radialen Werkstückabstützung mithilfe der hydrostatischen Lagerstellen 11, 13 bzw. 9, 10, 11, 12 und 13 anstellbar. Der als Rinne ausgeführte Rückführkanal 23 ist die Lagerstellen 11 und 13 umlaufend angeordnet. Den Rückführkanal 23 umlaufend ist weiter die Nut 26 zum Eintreiben von Sperrluft 27 vorgesehen, um den Austritt an Lagerflüssigkeit 24 zu vermindern. Anhand dieser Sperrluft 27 kann auch hier wieder eine randseitige Dichtung 29 geschaffen werden. Alternativ bzw. zusätzlich ist jegliche andere Dichtung 29 vorstellbar, beispielsweise einen nicht dargestellter O-Ring 30 etc., welche Dichtungen 29 beispielsweise auch in die Nut 26 eingesetzt werden können. Es muss nicht weiter erwähnt werden, dass im Ausführungsbeispiel nach Fig. 1 anstatt der Schale 7 die Schale 31 und im Ausführungsbeispiel nach Fig. 5 anstatt der Schale 31 die Schale 7 verwendet werden kann.

Außerdem können die Ausführungsbeispiele nach den Figuren 1 und 5 eine weitere Abstützung auf der oberen Werkstückhälfte aufweisen. Diese Abstützung kann wieder mit einer Schale 38 geschaffen werden, die über ein lineares Stellglied 39 gegenüber dem Werkstück 6 positioniert werden kann. Zu Einstellzwecken kann auch hier beispielsweise ein Kurbelantrieb 40 vorgesehen sein.

## Patentansprüche

1. Lünette zur Abstützung eines Werkstücks (6) einer Werkzeugmaschine (5) mit einem Träger (2) zur vorzugsweisen Montage am Maschinenbett (4) der Werkzeugmaschine (5), mit mindestens einer Schale (7, 31), die wenigstens zwei voneinander beabstandete hydrostatische Lagerstellen (9, 10, 11, 12, 13) für das Werkstück (6) aufweist, und mit einer zwischen dem Träger (2) und der Schale (7 31) vorgesehenen Positioniereinrichtung (8), die mindestens eine Verstellachse (14, 15, 33, 36) aufweist, die einem verstellbaren Stellglied (14', 15', 32, 37) zugehört, über das die Schale (7, 31) an das Werkstück (6) zur Ausbildung einer radialen Werkstückabstützung mit Hilfe der hydrostatischen Lagerstellen (9, 10, 11, 12, 13) anstellbar ist, **dadurch gekennzeichnet, dass** die Positioniereinrichtung (8) zwei zueinander geneigt verlaufende Verstellachsen (14, 15, 33, 36) aufweist, die jeweils einem verstellbaren Stellglied (14', 15', 32, 37) zugehören.

2. Lünette nach Anspruch 1, **dadurch gekennzeichnet, dass** ausschließlich eine Schale (7, 31) im Wesentlichen die untere Werkstückhälfte des Werkstücks (6) umschließt.

3. Lünette nach Anspruch 1 oder 2, **dadurch gekennzeichnet, dass** entlang des Rands der Schale (7, 31) eine Dichtung (29) verlaufend vorgesehen ist.

4. Lünette nach Anspruch 1, 2 oder 3, **dadurch gekennzeichnet, dass** die hydrostatischen Lagerstellen (9, 10, 11, 12, 13) der Schale (7, 31) eine zusammenhängende radiale Lagerfläche (18) ausbilden.

5. Lünette nach einem der Ansprüche 1 bis 4, **dadurch gekennzeichnet, dass** die Schale (7) zwei randseitige Lagerstellen (11, 13) und wenigstens eine dazu mittige hydrostatische Lagerstelle (9) aufweist.

6. Lünette nach einem der Ansprüche 1 bis 5, **dadurch gekennzeichnet, dass** die Schale (7) am Träger (2) entsprechend der Werkstückachse teilweise frei kippbar gelagert ist.

7. Lünette nach einem der Ansprüche 1 bis 6, **dadurch gekennzeichnet, dass** die Positioniereinrichtung (8) zwei linear entlang einer Verstellachse (14, 15) verstellbare Stellglieder (14', 15') aufweist, die an unterschiedlichen Schalenpositionen (19, 20) angreifen.

8. Lünette nach einem der Ansprüche 1 bis 6, **dadurch gekennzeichnet, dass** die Positioniereinrichtung (8) ein linear entlang einer Verstellachse (36) verstellbares Stellglied (37) und weiter ein um eine Schwenkachse (33) verschwenkbar gelagertes Stellglied (32) aufweist.

9. Werkzeugmaschine mit einer Werkstückspannvorrichtung zur Befestigung eines Werkstücks (6) und mit einer Lünette (1) nach einem der Ansprüche 1 bis 8 zur Abstützung des eingespannten Werkstücks (6).

## Claims

1. A steady rest for the support of a workpiece (6) on a machine tool (5), comprising a carrier (2) for preferred mounting on the machine bed (4) of the machine tool (5), at least one shell (7, 31) which comprises at least two mutually spaced hydrostatic bearing positions (9, 10, 11, 12, 13) for the workpiece (6), and a positioning device (8) which is provided between the carrier (2) and the shell (7, 31) and comprises at least one adjustment axis (14, 15, 33, 36) belonging to an adjustable actuator (14', 15', 32, 37), by means of which the shell (7, 31) can be moved against the workpiece (6) for forming a radial workpiece support by means of the hydrostatic bearing positions (9, 10, 11, 12, 13), **characterized in that** the positioning device (8) comprises two adjustment axes (14, 15, 33, 36) which extend in a mutually inclined manner with respect to each other and which are respectively allocated to an adjustable actuator (14', 15', 32, 37).

2. A steady rest according to claim 1, **characterized in that** only one shell (7, 31) substantially encloses the bottom half of the workpiece (6).

3. A steady rest according to claim 1 or 2, **characterized in that** a seal (29) is provided which extends along the edge of the shell (7, 31).

4. A steady rest according to claim 1, 2 or 3, **characterized in that** the hydrostatic bearing positions (9, 10, 11, 12, 13) of the shell (7, 31) form a contiguous radial bearing area (18).

5. A steady rest according to one of the claims 1 to 4, **characterized in that** the shell (7) comprises two boundary bearing positions (11, 13) and at least one hydrostatic bearing position (9) which is centric thereto.

6. A steady rest according to one of the claims 1 to 5, **characterized in that** the shell (7) is mounted on the carrier (2) according to the workpiece axis in a partly freely tiltable manner.

7. A steady rest according to one of the claims 1 to 6, **characterized in that** the positioning device (8) comprises two actuators (14', 15') which are linearly adjustable along an adjustment axis (14, 15) and which act on different shell positions (19, 20).

8. A steady rest according to one of the claims 1 to 6, **characterized in that** the positioning device (8) comprises an actuator (37) which is linearly adjustable along an adjustment axis (36) and further an actuator (32) which is pivotably mounted about a pivoting axis (33).

9. A machine tool, comprising a workpiece chucking apparatus for fixing a workpiece (6) and a steady rest (1) according to one of the claims 1 to 8 for supporting the chucked workpiece (6).

## Revendications

1. Lunette pour soutenir une pièce d'oeuvre (6) d'une machine-outil (5) avec un support (2) permettant un montage préférentiel sur le socle (4) de la machine-outil (5), avec au moins une coquille (7, 31) qui présente au moins deux points d'appui hydrostatiques (9, 10, 11, 12, 13) écartés l'un de l'autre pour la pièce d'oeuvre (6) et avec un dispositif de positionnement (8) disposé entre le support (2) et la coquille (7, 31), qui présente au moins un axe de déplacement (14, 15, 33, 36) appartenant à un élément de réglage déplaçable (14', 15', 32, 37), par lequel la coquille (7, 31) peut être appliquée sur la pièce d'oeuvre (6) pour former un appui de pièce d'oeuvre radial à l'aide des points d'appui hydrostatiques (9, 10, 11, 12, 13), **caractérisée en ce que** le dispositif de positionnement (8) présente deux axes de déplacement (14, 15, 33, 36) inclinés l'un par rapport à l'autre, qui appartiennent chacun à un élément de réglage déplaçable (14', 15', 32, 37).

2. Lunette selon la revendication 1, **caractérisée en ce qu'**une coquille (7, 31) exclusivement entoure pour l'essentiel la moitié inférieure de la pièce d'oeuvre (6).

3. Lunette selon la revendication 1 ou 2, **caractérisée en ce qu'**il est prévu un joint (29) courant le long du bord de la coquille (7, 31).

4. Lunette selon la revendication 1, 2 ou 3, **caractérisée en ce que** les points d'appui hydrostatiques (9, 10, 11, 12, 13) de la coquille (7, 31) forment une surface d'appui radiale (18) continue.

5. Lunette selon l'une des revendications 1 à 4, **caractérisée en ce que** la coquille (7) présente deux points d'appui situés sur les bords (11, 13) et au moins un point d'appui hydrostatique central (9) par rapport à ceux-ci.

6. Lunette selon l'une des revendications 1 à 5, **caractérisée en ce que** la coquille (7) est supportée sur le support (2) avec possibilité de basculer de façon partiellement libre par rapport à l'axe de la pièce d' oeuvre.

7. Lunette selon l'une des revendications 1 à 6, **caractérisée en ce que** le dispositif de positionnement (8) présente deux éléments de réglage (14', 15') déplaçables de façon linéaire le long d'un axe de déplacement (14, 15), qui se mettent en prise en différentes positions (19, 20) de la coquille.

8. Lunette selon l'une des revendications 1 à 6, **caractérisée en ce que** le dispositif de positionnement (8) présente un organe de réglage (37) déplaçable le long de l'axe de déplacement (36) et aussi un organe de réglage (32) supporté de façon pivotante autour d'un axe de pivotement (33).

9. Machine-outil avec un mécanisme de serrage des pièces d'oeuvre pour la fixation d'une pièce d'oeuvre (6) et avec une lunette (1) selon l'une des revendications 1 à 8 pour soutenir la pièce d' oeuvre (6) serrée.
